# FASCICULE DE BREVET EUROPEEN

(11) **EP 0 471 720 B1**
(45) Date de publication et mention de la délivrance du brevet: **12.01.1994**
(21) Numéro de dépôt: 90907172.2
(22) Date de dépôt: 03.05.1990
(51) Int. Cl.: B01D 17/022, C02F 1/40, C02F 1/68, E02B 15/10

(54) **TISSU HYDROFUGE CONTENANT UN ABSORBANT POUR LA RECUPERATION EN SURFACE AQUEUSE DES SUBSTANCES FLUIDES NON MISCIBLES**
HYDROPHOBES GEWEBE, DAS EIN ADSORBENS ENTHÄLT FÜR DIE ENTFERNUNG VON MIT WASSER NICHT MISCHBAREN SUBSTANZEN VON WASSEROBERFLÄCHEN
WATER REPELLENT FABRIC CONTAINING AN ABSORBING AGENT FOR COLLECTING AT THE WATER SURFACE NON MISCIBLE FLUID SUBSTANCES

(30) Priorité: 05.05.1989 FR 8906163
(43) Date de publication de la demande: 26.02.1992
(73) Titulaire: AGNEL, roger, F-13004 Marseille (FR)
(72) Inventeur: AGNEL, roger, F-13004 Marseille (FR)
(74) Mandataire: Roman, Michel
(86) Numéro de dépôt international: FR9000316
(87) Numéro de publication internationale: WO9013343

(56) Documents cités:
- DE-A- 1 634 014
- DE-A- 2 121 334
- DE-A- 2 123 060
- DE-A- 2 750 838
- DE-A- 3 122 219
- DE-A- 3 227 749
- DE-A- 3 632 360
- DE-U- 1 981 279
- FR-B- 2 421 204

## Description

La présente invention concerne un dispositif selon le préambule de la revendication 1.

Il est destiné à la récupération des pétroles, mazout et autres substances similaires répandues à la surface d'une nappe d'eau ou de la mer, afin de supprimer toute pollution.

Il est connu de traiter les nappes de mazout et similaires répandues à la surface de l'eau en utilisant la craie en poudre, des détergents ou des dispersants. Ces produits sont le plus souvent inéfficaces car les agents, soit souillent les fonds, soit polluent un volume d'eau plus important que celui initial, par fractionnement ou dispersion.

D'autres procédés ont été proposés, à savoir :
- Le pompage qui exige beaucoup de temps et le déplacement d'un volume d'eau très important.
- L'utilisation d'emballages dont le poids spécifique est plus bas que celui de l'eau, chaque récipient devant réceptionner le pétrole consistant en une enveloppe au moins en partie insoluble dans l'eau et contenant un produit absorbant la substance non miscible cf. par exemple, le FR-B-2 421 204 du même inventeur. DE-A-2 121 334 de W.R. GRACE La décrit un barrage destiné à l'élimination d'hydrocarbures de la surface de l'eau selon le préambule de la revendication 1

Les différents emballages et produits absorbants envisagés jusqu'à ajourd'hui se sont avérés insuffisamment efficaces à l'usage.

Le dispositif suivant la présente invention supprime tous ces inconvénients et permet d'absorber uniquement le produit polluant en l'éliminant de son support accidentel.

Il est caractérisé par les éléments énoncés dans la partie caractérisante de la revendication 1.

La description détaillée ci-après se rapporte à un exemple non limitatif d'une des formes de réalisation de l'objet de l'invention Le produit objet de l'invention est constitué d'un produit absorbant contenu dans une enveloppe en tissu. De multiples essais ont permis de retenir deux tissus offrant les meilleurs résultats
1° Un tissu 100 % acrylique, tissage réalisé en côte 1 et 1, 10 colonnes et 13 rangées au centimètre, 130 mailles au centimètre carré et un poids de 220 grammes au mètre carré.
2° Un tissu contenant 50 % de fibres acryliques et 50 % de coton, dont le tissage est réalisé en côte 1 et 1, la longueur moyenne de fil absorbée pour 100 mailles étant de 56,2 centimètres, la jauge de métier étant E 18. Ce tissu possède une densité de mailles de 173 par centimètre carré et un poids de 190 grammes au mètre carré.

Le traitement hydrofuge du tissu, qui va permettre d'effectuer un véritable filtrage et ainsi séparer le polluant de son support porteur répondra à la formule suivante :
10 parties d'hydrocarbure saturé solide (paraffine) sont chauffées au bain-marie jusqu'au point de fusion et mises en solution dans 80 parties de trichloréthylène, on ajoute ensuite 10 parties de résine de silicone en solution dans du white spirit. Avant refroidissement du mélange ainsi obtenu, on y trempe le tissu pendant 5 minutes, puis on le retire et on le laisse sécher. L'effet d'hydrofugation est vérifié en laissant couler un mince filet d'eau à la surface. Le tissu ne doit plus être mouillé par l'eau. Le trichloréthylène a été choisi en raison de son élimination rapide du tissu, mais d'autres solvants peuvent être utilisés pour des motifs économiques.

La composition de l'absorbant contenu dans l'enveloppe de tissu formant barrage ou les récipients individuels de récupération répondront à la formulation et au traitement suivants:

On effectue tout d'abord un pré-mélange de 10 parties d'un sel organo-métallique en poudre d'un acide supérieur saturé à chaîne linéaire, par exemple stéarate d'alumine, dans 5 parties de carbonate de calcium naturel ou précipité ultra-fin, en veillant à la parfaite dispersion de l'hydrofugeant en poudre à la surface de l'absorbant. Après dispersion parfaite, on ajoute 40 parties de sciure de bois d'une granulométrie adaptée au polluant à récupérer (fine pour les produits à faible viscosité, grossière pour les produits visqueux), puis on introduit 5 parties de fibres de cellulose et 10 parties de déchets de tissus, si possible de même qualité que celle de l'enveloppe, et ayant subi le traitement hydrofuge.

Dans le cas de produits très visqueux, on peut envisager d'introduire une faible quantité de paille naturelle ou synthétique afin de créer des cavités où sera piégé le polluant tout en évitant un colmatage de l'absorbant.

Le barrage de longueur appropriée est constitué par un boudin de tissu hydrofugé dans lequel on introduit le mélange absorbant sans le tasser. De part et d'autre, du boudin à la surface de la nappe aqueuse, sera prévu un dépassant de tissu hydrofugé servant de piège au polluant et maintenu déployé par des baleines ou tendeurs en bois hydrofugé ou tubes plastiques étanches. Le cylindre de tissu sera renforcé par deux cordages hydrofugés diamétralement opposés.

Les récipients individuels, de capacité variable, seront constitués d'une enveloppe de tissu hydrofugé remplie de mélange absorbant et comporteront comme ci-dessus un dépassant de largeur variable maintenu par des baleines.

Grâce à son efficacité, à sa facilité d'utilisation et à son faible coût de revient, le produit qui vient d'être décrit se prête particulièrement bien à la lutte contre les "marées noires".

Le positionnement des divers éléments constitutifs donnent à ce produit un maximum d'effets utiles qui n'avaient pas été obtenus à ce jour par des produits similaires.

## Revendications

1. Dispositif pour la récupération en surface aqueuse des substances fluides non miscibles, destiné à la récupération des pétroles, mazout et autres substances similaires répandues à la surface d'une nappe d'eau ou de la mer, constitué par la combinaison d'enveloppes perméables en tissu hydrofugé remplies d'une masse absorbante hydrofugée grâce à un sel organo-métallique, et constituant soit un barrage absorbant en forme d'un boudin, soit des récipients individuels de récupération, caractérisé en ce que lesdites enveloppes sont réalisées dans un tissu hydrofugé constitué d'au moins 30 % de fibres acryliques et comportent de part et d'autre, à la surface de la nappe aqueuse, un dépassant de tissu hydrofugé servant de piège au polluant et maintenu déployé par des baleines ou tendeurs en bois hydrofugé ou tubes plastiques étanches, et en ce que lesdites enveloppes sont remplies d'une masse absorbante hydrofugée grâce à un sel organo-métallique d'un acide supérieur saturé à chaîne linéaire, par exemple stéarate d'aluminium.

2. Dispositif suivant la revendication 1, se caractérisant par le fait que l'enveloppe est réalisée dans un tissu 100 % acrylique, avec tissage en côte 1 et 1, dont les caractéristiques sont sensible ment les suivantes :
10 colonnes et 13 rangées au centimètre, 130 mailles au centimètre carré et un poids de 220 grammes au mètre carré.

3. Dispositif suivant la revendication 1, se caractérisant par le fait que l'enveloppe est réalisée dans un tissu 50 % acrylique et 50 % coton, avec tissage en côte 1 et 1, dont -les caractéristiques sont sensiblement les suivantes :
longueur moyenne de fil absorbée pour 100 mailles 56,2 centimètres, jauge de métier : E 18, densité de mailles de 173 par centimètre carré et poids de 190 grammes au mètre carré.

4. Dispositif suivant l'une quelconque des revendications précédentes, caracterisé en ce que le tissu hydrofugé est obtenu de la façon suivante:
10 parties d'hydrocarbure saturé solide (paraffine) sont chauffées au bain-marie jusqu'au point de fusion et mises en solution dans 80 parties de trichloréthylène ou d'un solvant similaire; on ajoute ensuite 10 parties de résine de silicone en solution dans du white spirit. Avant refroidissement du mélange ainsi obtenu, on y trempe le tissu pendant 5 minutes, puis on le retire et on le laisse sécher.

5. Dispositif suivant l'une quelconque des revendications précédentes, caractérisé en ce que la masse absorbante contenue dans l'enveloppe de tissu formant un barrage ou des récipients individuels de récupération est obtenue de la façon suivante :
On effectue tout d'abord un pré-mélange de 10 parties d'un sel organo-métallique d'un acide supérieur satiré en poudre à chaîne linéaire, par exemple stéarate d'aluminium, dans 5 parties de carbonate de calcium naturel ou précipité ultrafin. Après dispersion parfaite, on ajoute 40 parties de sciure de bois d'une granulométrie d'autant plus fine que le polluant est moins visqueux, puis on introduit 5 parties de fibres de cellulose et 10 parties de déchets de tissus, si possible de même qualité que celle de l'enveloppe, et ayant subi le traitement hydrofuge.

6. Dispositif suivant la revendication 5, se caractérisant par le fait que dans le cas de produits très visqueux, on introduit dans le mélange absorbant une faible quantité de paille naturelle ou synthétique afin de créer des cavités où sera piégé le polluant.

7. Dispositif suivant la revendication 1, se caractérisant par le fait que le cylindre de tissu formant barrage est renforcé par deux cordages hydrofugés diamètralement opposés.

## Patentansprüche

1. Vorrichtung zur Bergung auf Wasserflächen von nicht mischbaren flüssigen Substanzen, bestimmt für die Bergung von Erdölen, Heizöl und anderen ähnlichen Substanzen auf einer Wasseroberfläche oder auf dem Meer, bestehend aus einer Kombination von durchlässigen Hüllen aus wasserabstoßend imprägnierten Gewebe, gefüllt mit einer absorbierenden, mittels eines organisch-metallischen Salzes wasserabstoßend imprägnierten Masse und welche entweder eine absorbierende Sperre in Form eines Schlauchs oder einzelne Bergungsbehältnisse bildet, dadurch gekennzeichnet, daß die besagten Hüllen aus einem wasserabstoßend imprägnierten Gewebe hergestellt sind, bestehend aus mindestens 30 % Akrylfasern mit jeweils auf beiden Seiten an der Oberfläche des Wassers einem Vorstoß aus wasserabstoßend imprägniertem Gewebe, welcher als Falle für das verschmutzende Öl dient und von Fischbeinen oder Spannern aus wasserabweisend imprägniertem Holz oder dichten Kunststoffrohren ausgebreitet gehalten wird, und daß die besagten Hüllen mit einer absorbierenden, mittels eines organisch-metallischen Salzes einer gesättigten höheren Säure mit linearer Kette, wie z.B. Aluminiumstearat, wasserabstoßend imprägnierten Masse gefüllt sind.

2. Vorrichtung nach Anspruch 1, dadurch gekennzeichnet, daß die Hülle zu 100 % aus Akrylfasergewebe in Rechts-Rechts-Bindung hergestellt ist, deren Eigenschaften im wesentlichen wie folgt sind:
Maschendichte: Kette 10, Schuß 13 je Zentimeter, 130 Maschen je Quadratzentimeter und einem Gewicht von 220 Gramm je Quadratmeter.

3. Vorrichtung nach Anspruch 1, dadurch gekennzeichnet, daß die Hülle mit einem Gewebe aus 50 % Akrylfasern und 50 % Baumwolle in Rechts-Rechts-Bindung hergestellt ist, deren Eigenschaften im wesentlichen wie folgt sind:
Durchschnittliche Fadenlänge für 100 Maschen: 56,2 Zentimeter, Feinheit: E 18, mit einer Dichte von 173 Maschen je Quadratzentimeter und einem Gewicht von 190 Gramm je Quadratmeter.

4. Vorrichtung nach irgendeinem der vorstehenden Ansprüche, dadurch gekennzeichnet, daß das wasserabstoßend imprägnierte Gewebe auf die folgende Weise hergestellt wird:
10 Teile fester, gesättigter Kohlenwasserstoff (Paraffin) werden im Wasserbad bis zum Schmelzpunkt erwärmt und mit 80 Teilen Trichlorethylen oder einem ähnlichen Lösungsmittel zu einer Lösung gemischt, dann werden 10 Teile Silikonharz in einer White Spirit Lösung beigegeben. Vor Abkühlung der so erhaltenen Mischung wird das Gewebe während 5 Minuten in diese eingetaucht, dann herausgenommen und trocknen gelassen.

5. Vorrichtung nach irgendeinem der vorstehenden Ansprüche, dadurch gekennzeichnet, daß die in der eine Sperre bildende Hülle bzw. den zur Bergung bestimmten individuellen Behältnissen enthaltene Masse auf folgende Weise hergestellt wird:
Zuerst erfolgt eine Vormischung von 10 Teilen eines organisch-metallischen Salzes einer gesättigten höheren Säure in Pulverform mit linearer Kette, wie z.B. Aluminiumstearat, in 5 Teilen natürlichem oder ultra-fein gefälltem Kalziumkarbonat. Nach vollständiger Dispersion werden 40 Teile Holzmehl hinzugefügt, mit einer Körnung, die um so feiner sein sollte je weniger zähflüssig das verschmutzende Öl ist, dann werden 5 Teile Zellulosefasern und 10 Teile Gewebeverschnitt, soweit möglich von der gleichen Qualität wie die der Hülle und der der wasserabweisenden Behandlung unterzogen wurde, hinzugegeben.

6. Vorrichtung nach Anspruch 5, dadurch gekennzeichnet, daß bei sehr zähflüssigen Produkten in die absorbierende Mischung eine geringe Menge von natürlichem oder synthetischen Stroh beigegeben wird, um Hohlräume herzustellen, in denen das verschmutzende Öl aufgefangen wird.

7. Vorrichtung nach Anspruch 1, dadurch gekennzeichnet, daß der eine Sperre bildende Gewebezylinder durch zwei entgegengesetzte, wasserabstoßend imprägnierte Seile verstärkt wird.

## Claims

1. Device for the recovery of non-mixable fluids on an aqueous surface, to be used for the recovery of petrol, oil and other similar substances spread on the surface of water or the sea, consisting of a combination of permeable envelopes in water repellant fabric filled with an absorbant water repellant mass which uses an organo-metallic salt and constitutes either an absorbing barrier in the form of a filled tube, or individual recovery recipients, characterized in that the said envelopes are executed in a water repellant fabric comprising at least 30% acrylic fibers and including, on either side, at the surface of the aqueous medium, a projection of the water repellant fabric which acts as a trap to the pollutant and is held in a spread position by ribs or water repellant wood stiffeners or leaktight plastic tubes, and in that the said envelopes are filled with a water repellant absorbant mass based on an organo-metallic salt of a straight chain, saturated, superior acid, for instance aluminostearate.

2. Device as per claim 1, characterized by the fact that the envelope is executed in 100% acrylic fabric, of right/right construction, whose characteristics are roughly as follows:
10 columns and 13 rows per cm, 130 meshes per cm2 weighing 220 grams per square meter.

3. Device as per claim 1 characterized by the fact that the envelope is executed in a 50% acrylic and 50% cotton fabric, with right/right construction, whose characteristics are roughly as follows:
mean length of thread used per 100 mesh is 56.2 centimeters, loom gauge is E 18, mesh density is 173 cm2 and weight 190 grams per square meter.

4. Device per any one of the aforesaid claims characterized in that the water repellant fabric is obtained as follows:
10 parts solid saturated hydrocarbon (paraffin) heated in a bath to melting point and mixed in a solution 80 parts trichlorethylene or a similar solvent; 10 parts silicon resin in a white spirit solution are then added. Before the mixture obtained cools, the fabric is soaked for 5 minutes and then withdrawn and allowed to dry.

5. Device as per any one of the aforesaid claims, characterized in that the absorbant mass contained in the fabric envelope forming barrier or the individual recipients for recovery are produced as follows:
First of all a solution of 10 parts linear chain, saturated, superior acids of an organo-metallic salt in powder form, for instance aluminostearate with 5 parts natural calcium carbonate or ultrafine precipitate. After perfect dispersion, 40 parts of sawdust with a granulometry which becomes finer as the pollutant is viscous, and then introduction of 5 parts cellulose fiber and 10 parts fabric waste, if possible of the same quality as the envelope having undergone water repellant treatment.

6. Device as per claim 5 characterized by the fact that, in the case of less viscous products, a weak quantity of natural or synthetic straw is introduced in the absorbant mixture in order to create cavities in which the pollutant will be trapped.

7. Device as per claim 1 characterized by the fact that the cylinder of fabric forming the barrier is strengthened by two diametrically opposite water repellant ropes.
